# EUROPÄISCHE PATENTSCHRIFT

(11) **EP 3 336 389 B1**
(45) Veröffentlichungstag und Bekanntmachung des Hinweises auf die Patenterteilung: **05.06.2019**
(21) Anmeldenummer: 17202667.6
(22) Anmeldetag: 21.11.2017
(51) Int. Cl.: F16H 61/4104

(54) **STEUERVENTIL MIT DÄMPFUNGSEINRICHTUNG**
CONTROL VALVE WITH DAMPING DEVICE
SOUPAPE DE COMMANDE DOTÉE DU DISPOSITIF D'AMORTISSEMENT

(30) Priorität: 15.12.2016 DE 102016124437
(43) Veröffentlichungstag der Anmeldung: 20.06.2018
(73) Patentinhaber: Linde Hydraulics GmbH & Co. KG, 63743 Aschaffenburg (DE)
(72) Erfinder: DIERKES, Thomas, 63743 Aschaffenburg (DE); STEIGERWALD, Martin, 63864 Glattbach (DE); BAUMANN, Matthias, 63741 Aschaffenburg (DE)
(74) Vertreter: Patentship Patentanwaltsgesellschaft mbH

(56) Entgegenhaltungen:
- EP-A1- 0 149 743
- DE-A1- 10 145 975
- DE-A1- 19 725 727
- DE-A1-102004 026 683
- DE-A1-102014 210 161
- US-A1- 2005 016 086

## Beschreibung

Die Erfindung betrifft ein Steuerventil mit einem in einer Längsbohrung eines Gehäuses längsverschiebbar angeordneten Steuerschieber, wobei das Steuerventil zumindest einen Eingangsanschluss und einen Ausgangsanschluss aufweist, wobei der Steuerschieber zwischen einer Sperrstellung, in der eine Verbindung des Eingangsanschlusses mit dem Ausgangsanschluss abgesperrt ist, und mindestens einer Öffnungsstellung, in der der Eingangsanschlusses mit dem Ausgangsanschluss verbunden ist, betätigbar ist wobei eine mit dem Steuerschieber in Wirkverbindung stehende hydraulische Dämpfungseinrichtung vorgesehen ist, mit der eine Dämpfung der Bewegung des Steuerschiebers erzeugbar ist.

Aus der DE 101 45 975 A1 ist ein gattungsgemäßes Steuerventil bekannt, das als Druckbegrenzungsventil mit Hauptstufe und Vorsteuerstufe ausgebildet ist. Die Vorsteuerstufe weist einen Vorsteuerkolben auf, der als Dämpfungsglied wirkt und die Schließbewegung des Vorsteuerventilkörpers dämpft, so dass ein schnelles Öffnen des Vorsteuerventilkörpers sowie ein gedämpftes Schließen der Vorsteuerstufe ermöglicht wird.

Die US 2005/016086 A1 offenbart einen Dämpferzylinder, der mittels eines vorgesteuerten Ventils steuerbar ist.

Gattungsgemäße Steuerventile werden beispielsweise in hydrostatischen Antriebssystemen mit einem geschlossenen Kreislauf als Ausspeiseventile eingesetzt, um erwärmtes Druckmittel in der Öffnungsstellung des Steuerventils aus der jeweiligen Niederdruckseite des geschlossenen Kreislaufs auszuspeisen. Ein hydrostatisches Antriebssystem mit einem als Wechselventil bezeichneten Ausspeiseventil ist aus der DE 10 2014 210 161 A1 bekannt. Das mit dem Ausspeiseventil entnommene Druckmittel wird durch kühles Druckmittels aus einer Einspeiseinrichtung in der Niederdruckseite des geschlossenen Kreislaufs ausgeglichen und somit ersetzt. Das Ausspeisen von erwärmtem Druckmittel und Zuführen von kühlem Druckmittel an der Niederdruckseite des geschlossenen Kreislaufs dient zur Regulierung des Temperaturhaushalts des Druckmittels des geschlossenen Kreislaufs.

Bei derartigen als Ausspeiseventilen von Antriebssystemen im geschlossenen Kreislauf verwendeten Steuerventilen kann es bei bestimmten Anwendungen mit ungünstigen Betriebsparametern dazu kommen, dass das Ausspeiseventil zum Schwingen neigt. Dieses Schwingen des Ausspeiseventils kann im Extremfall dazu führen, dass Druckmittel aus der jeweiligen Hochdruckseite des geschlossenen Kreislaufs, die mit dem Eingangsanschluss des Steuerventils verbunden ist, bei in der Öffnungsstellung befindlichem Steuerventil zu dem Ausgangsanschluss des Steuerventils entweicht. Dies führt zu einer Leckage aus der Hochdruckseite des geschlossenen Kreislaufs und entsprechenden Energieverlusten des Antriebssystems. Bei einem als hydrostatischen Fahrantrieb eines Fahrzeugs ausgebildete Antriebssystem, das einen geschlossenen Kreislauf aufweist, kann das Schwingen des Ausspeiseventils dazu führen, dass ein an einem Gefälle befindliches Fahrzeugs aufgrund der von dem Ausspeiseventil durch die Verbindung der Hockdruckseite des geschlossenen Kreislaufs mit dem Ausgangsanschluss verursachten Leckage hangabwärts rollt.

Der vorliegenden Erfindung liegt die Aufgabe zugrunde, ein Steuerventil der eingangs genannten Gattung zur Verfügung zu stellen, bei dem die Gefahr verhindert wird, dass bei einem Druckwechsel in dem Eingangsanschluss von Niederdruck zu Hochdruck ein Abströmen von Druckmittel vom Eingangsanschluss in den Ausgangsanschluss und somit eine Leckage vom mit Hochdruck beaufschlagten Eingangsanschluss zum Ausgangsanschluss auftritt.

Diese Aufgabe wird erfindungsgemäß dadurch gelöst, dass die hydraulische Dämpfungseinrichtung derart ausgebildet ist, dass die Dämpfung der Dämpfungseinrichtung bei einer Bewegung des Steuerschiebers von der Sperrstellung in die Öffnungsstellung wirksam ist und die Dämpfung der Dämpfungseinrichtung bei einer Bewegung des Steuerschiebers von der Öffnungsstellung in die Sperrstellung unwirksam ist, wobei die hydraulische Dämpfungseinrichtung mindestens einen Dämpfungskolben aufweist, der in einer Aufnahmebohrung längsverschiebbar angeordnet ist, wobei zwischen der Aufnahmebohrung und dem Dämpfungskolben ein Dämpfungsraum ausgebildet ist, der von Druckmittel gefüllt ist, wobei zum Wirksammachen der Dämpfung Druckmittel beim Hineinfahren des Dämpfungskolbens in die Aufnahmebohrung über eine Drosseleinrichtung aus dem Dämpfungsraum verdrängt wird und wobei zum Unwirksammachen der Dämpfung Druckmittel beim Herausfahren des Dämpfungskolbens aus der Aufnahmebohrung über eine Nachsaugeöffnung in den Dämpfungsraum einströmt. Das erfindungsgemäße Steuerventil ist somit mit einer hydraulischen Dämpfungseinrichtung versehen, die nur in eine Bewegungsrichtung des Steuerschiebers aktiv ist und eine Dämpfung der Bewegung des Steuerschiebers erzeugt, nämlich in Öffnungsrichtung von der Sperrstellung in die Öffnungsstellung. In die zweite Bewegungsrichtung des Steuerschiebers, nämlich in Schließrichtung von der Öffnungsstellung in die Sperrstellung, ist die Dämpfungseinrichtung nicht aktiv, so dass der Steuerschieber ohne Dämpfung und somit schnell von der Öffnungsstellung in die Sperrstellung betätigt werden kann. Tritt somit an dem Eingangsanschluss des Steuerventils ein Druckwechsel von Niederdruck zu Hochdruck auf, kann der Steuerschieber in schneller Weise von der Öffnungsstellung in die Sperrstellung betätigt werden, so dass ein Abströmen von Druckmittel vom Eingangsanschluss zum Ausgangsanschluss durch eine Betätigung des Steuerventils in die Sperrstellung und somit eine Leckage vom mit Hochdruck beaufschlagten Eingangsanschluss zum Ausgangsanschluss verhindert werden kann.

Die hydraulische Dämpfungseinrichtung weist mindestens einen Dämpfungskolben auf, der in einer Aufnahmebohrung längsverschiebbar angeordnet ist, wobei zwischen der Aufnahmebohrung und dem Dämpfungskolben ein Dämpfungsraum ausgebildet ist, der von Druckmittel gefüllt ist, wobei zum Wirksammachen der Dämpfung Druckmittel beim Hineinfahren des Dämpfungskolbens in die Aufnahmebohrung über eine Drosseleinrichtung aus dem Dämpfungsraum verdrängt wird und wobei zum Unwirksammachen der Dämpfung Druckmittel beim Herausfahren des Dämpfungskolbens aus der Aufnahmebohrung über eine Nachsaugeöffnung in den Dämpfungsraum einströmt. Beim Hineinfahren des Dämpfungskolbens in die Aufnahmebohrung wird das Druckmittel über eine Drosseleinrichtung aus dem Dämpfungsraum herausgedrängt, so dass die Dämpfung wirksam ist. Beim Herausfahren des Dämpfungskolbens aus der Aufnahmebohrung kann Druckmittel über die Nachsaugeöffnung in den Dämpfungsraum hineinströmen, so dass die Dämpfung unwirksam ist. Mit einem derartigen Dämpfungskolben kann auf einfache Weise erzielt werden, dass in nur einer Bewegungsrichtung des Steuerschiebers, in der der Dämpfungskolben in die Aufnahmebohrung hineingefahren wird, die Dämpfung wirksam und somit aktiv ist, jedoch in der zweiten Bewegungsrichtung, in der der Dämpfungskolbens aus der Aufnahmebohrung herausfährt, die Dämpfung unwirksam und somit nicht aktiv ist.

Hinsichtlich eines einfachen Aufbaus des Dämpfungskolbens ergeben sich besondere Vorteile, wenn die Drosseleinrichtung gemäß einer vorteilhaften Ausgestaltungsform der Erfindung von einem Ringspalt zwischen dem Dämpfungskolben und der Aufnahmebohrung gebildet ist. Beim Hineinfahren des Dämpfungskolbens in die Aufnahmebohrung wird somit das in dem Dämpfungsraum befindliche Druckmittel über den Ringspalt verdrängt und hierdurch die Dämpfung erzielt.

Gemäß einer vorteilhaften Weiterbildung der Erfindung ist die Nachsaugeöffnung des Dämpfungskolbens von dem Steuerschieber angesteuert, wobei die Nachsaugeöffnung des Dämpfungskolbens bei einer Bewegung des Steuerschiebers von der Sperrstellung in die Öffnungsstellung von dem Steuerschieber verschlossen ist und die Nachsaugeöffnung des Dämpfungskolbens bei einer Bewegung des Steuerschiebers von der Öffnungsstellung in die Sperrstellung von dem Steuerschieber geöffnet wird. Dadurch wird auf einfache Weise erzielt, dass bei einer Bewegung des Steuerschiebers von der Sperrstellung in die Öffnungsstellung die Dämpfung wirksam ist, indem bei verschlossener Nachsaugeöffnung das Druckmittel aus dem Dämpfungsraum des Dämpfungskolbens über die Drosseleinrichtung aus dem Dämpfungsraum verdrängt wird, und bei einer Bewegung des Steuerschiebers von der Öffnungsstellung in die Sperrstellung die Dämpfung durch Öffnen der Nachsaugeöffnung unwirksam ist.

Vorteile hinsichtlich eines günstigen Aufbaus ergeben sich, wenn gemäß einer bevorzugten Ausgestaltungsform der Erfindung der Dämpfungskolben koaxial zu dem Steuerschieber angeordnet ist und von dem Steuerschieber betätigbar ist, wobei der Dämpfungskolben bei einer Bewegung des Steuerschiebers von der Sperrstellung in die Öffnungsstellung von dem Steuerschieber in die Aufnahmebohrung hineingefahren wird und der Dämpfungskolben bei einer Bewegung des Steuerschiebers von der Öffnungsstellung in die Sperrstellung aus der Aufnahmebohrung herausfährt. Hierdurch wird auf einfache Weise erzielt, dass in der Bewegungsrichtung des Steuerschiebers von der Sperrstellung in die Öffnungsstellung die von dem Dämpfungskolben erzielte Dämpfung wirksam ist und in der zweiten Bewegungsrichtung des Steuerschiebers von der Öffnungsstellung in die Sperrstellung die von dem Dämpfungskolben erzielte Dämpfung unwirksam ist.

Vorteilhafterweise steht der Dämpfungskolben mit einer Federeinrichtung in Wirkverbindung, die den Dämpfungskolben aus der Aufnahmebohrung herausfährt.

Hinsichtlich eines einfachen Aufbaus ergeben sich Vorteile, wenn gemäß einer vorteilhaften Ausgestaltungsform der Erfindung der Dämpfungskolben mit einer Stirnseite des Steuerschiebers des Steuerventils in Wirkverbindung steht. Hierdurch kann auf einfache Weise eine Betätigung des Dämpfungskolbens durch den Steuerschieber des Steuerventils erzielt werden.

Sofern gemäß einer vorteilhaften Weiterbildung der Erfindung die Nachsaugeöffnung an einer Stirnseite des Dämpfungskolbens angeordnet ist und von der Stirnseite des Steuerschiebers angesteuert ist, kann die Nachsaugeöffnung des Dämpfungskolbens auf einfache Weise von der Stirnseite des Steuerschiebers des Steuerventils angesteuert und somit geöffnet und verschlossen werden.
Gemäß einer Weiterbildung der Erfindung weist das Steuerventil einen ersten Eingangsanschluss, einen zweiten Eingangsanschluss und einen Ausgangsanschluss auf, wobei der Steuerschieber zwischen einer Sperrstellung, in der eine Verbindung der beiden Eingangsanschlüsse mit dem Ausgangsanschluss abgesperrt ist, einer ersten Öffnungsstellung, in der der erste Eingangsanschlusses mit dem Ausgangsanschluss verbunden ist, und einer zweiten Öffnungsstellung, in der der zweite Eingangsanschlusses mit dem Ausgangsanschluss verbunden ist, betätigbar ist, wobei die hydraulische Dämpfungseinrichtung derart ausgebildet ist, dass die Dämpfung der Dämpfungseinrichtung bei einer Bewegung des Steuerschiebers von der Sperrstellung in die erste Öffnungsstellung oder die zweite Öffnungsstellung wirksam ist und dass die Dämpfung der Dämpfungseinrichtung bei einer Bewegung des Steuerschiebers von der ersten Öffnungsstellung oder der zweiten Öffnungsstellung in die Sperrstellung unwirksam ist. Ein derartiges erfindungsgemäßes Steuerventil mit zwei Öffnungsstellungen ist somit mit einer hydraulischen Dämpfungseinrichtung versehen, die nur in die jeweilige Öffnungsrichtung des Steuerventils aktiv ist und eine Dämpfung der Bewegung des Steuerschiebers von der Sperrstellung in die erste bzw. zweite Öffnungsstellung erzeugt. In Schließrichtung des Steuerventils von der ersten bzw. der zweiten Öffnungsstellung in die Sperrstellung ist die Dämpfungseinrichtung nicht aktiv, so dass der Steuerschieber ohne Dämpfung und somit schnell von der jeweiligen Öffnungsstellung in die Sperrstellung betätigt werden kann.

Die hydraulische Dämpfungseinrichtung weist hierzu gemäß einer vorteilhaften Ausgestaltungsform der Erfindung zwei Dämpfungskolben aufweist, wobei ein erster Dämpfungskolben bei einer Bewegung des Steuerschiebers von der Sperrstellung in die erste Öffnungsstellung eine Dämpfung der Bewegung des Steuerschiebers ermöglicht und ein zweiter Dämpfungskolben bei einer Bewegung des Steuerschiebers von der Sperrstellung in die zweite Öffnungsstellung eine Dämpfung der Bewegung des Steuerschiebers erzeugt. Bei einem Steuerventil mit zwei Öffnungsstellungen kann mit zwei erfindungsgemäßen Dämpfungskolben auf einfache Weise erzielt werden, dass die Dämpfung der Bewegung des Steuerschiebers nur in die jeweilige Öffnungsrichtung des Steuerschiebers wirksam ist, jedoch in die jeweilige Schließrichtung des Steuerschiebers die Dämpfungskolben keine Dämpfung der Bewegung des Steuerschiebers erzeugen.

Bei einem derartigen Steuerventil mit zwei Öffnungsstellungen steht vorteilhafterweise der erste Dämpfungskolben mit einer ersten Stirnseite des Steuerschiebers des Steuerventils in Wirkverbindung und der zweite Dämpfungskolben mit einer zweiten Stirnseite des Steuerschiebers des Steuerventils in Wirkverbindung. Hierdurch wird auf einfache Weise erzielt, dass bei einer entsprechenden Betätigung des Steuerschiebers von der Sperrstellung in die erste bzw. zweite Öffnungsstellung der erste bzw. zweite Dämpfungskolben betätigt wird, um die Dämpfung zu erzielen.

Vorteile ergeben sich, wenn gemäß einer Weiterbildung der Erfindung der erste Dämpfungskolben mit einem ersten Anschlag zusammenwirkt, der das Herausfahren des ersten Dämpfungskolbens aus der Aufnahmebohrung begrenzt, und der zweite Dämpfungskolben mit einem zweiten Anschlag zusammenwirkt, der das Herausfahren des zweiten Dämpfungskolbens aus der Aufnahmebohrung begrenzt. Mit derartigen Anschlägen wird auf einfache Weise ermöglicht, dass bei einem Steuerventil mit zwei Öffnungsstellungen die Dämpfungskolben bei einer Bewegung des Steuerschiebers von der jeweiligen Öffnungsstellung in die Sperrstellung keine Dämpfung erzeugen.

Der erste Dämpfungskolben liegt hierzu vorteilhafterweise in der Sperrstellung und in der zweiten Öffnungsstellung des Steuerschiebers an dem ersten Anschlag an und der zweite Dämpfungskolben in der Sperrstellung und in der ersten Öffnungsstellung des Steuerschiebers an dem zweiten Anschlag an. Sofern der Steuerschieber von der zweiten Öffnungsstellung in die Sperrstellung betätigt wird, wird durch das Anliegen des ersten Dämpfungskolbens an dem zugeordneten Anschlag erzielt, dass der erste Dämpfungskolben von dem Steuerschieber nicht betätigt wird und somit keine Dämpfung der Bewegung des Steuerschiebers in die Sperrstellung erzeugt. Sofern der Steuerschieber von der ersten Öffnungsstellung in die Sperrstellung betätigt wird, wird durch das Anliegen des zweiten Dämpfungskolbens an dem zugeordneten Anschlag erzielt, dass der zweite Dämpfungskolben von dem Steuerschieber nicht betätigt wird und somit keine Dämpfung der Bewegung des Steuerschiebers in die Sperrstellung erzeugt.

Gemäß einer vorteilhaften Ausgestaltungsform der Erfindung ist das Steuerventil als Ausspeiseventil eines hydrostatischen Antriebssystems im geschlossenen Kreislauf ausgebildet. Mit der erfindungsgemäßen Dämpfungseinrichtung wird somit erzielt, dass die Dämpfung nur in jeweilige Öffnungsrichtung des Ausspeiseventils wirksam ist, jedoch nicht in Schließrichtung. Mit einer derartigen Dämpfungseinrichtung können selbstinduzierte Schwingungen des Ausspeiseventils und des Antriebssystems vermieden werden, die bei ungünstigen Betriebsparametern auftreten können. Durch das schnelle und ungedämpfte Betätigen des Ausspeiseventils in die Sperrstellung kann insbesondere verhindert werden, dass bei einem Druckwechsel in einem Eingangsanschluss von Niederdruck auf Hochdruck Druckmittel aus der Hochdruckseite des geschlossenen Kreislaufs bei noch geöffnetem Ausspeiseventil zu dem Ausgangsanschluss entweichen kann. Leckagen aus der Hochdruckseite des geschlossenen Kreislaufs über das Ausspeiseventil und entsprechende Energieverluste des Antriebssystems können somit vermieden werden. Bei einem als hydrostatischen Fahrantrieb eines Fahrzeugs ausgebildete Antriebssystem kann insbesondere durch das schnelle Betätigen des Ausspeiseventils in die Sperrstellung vermieden werden, dass ein an einem Gefälle befindliches Fahrzeugs hangabwärts rollt.

Weitere Vorteile und Einzelheiten der Erfindung werden anhand des in den schematischen Figuren dargestellten Ausführungsbeispiels näher erläutert. Hierbei zeigt
- Figur 1: einen Schaltplan eines hydrostatischen Antriebssystems im geschlossenen Kreislauf mit einem erfindungsgemäßen Steuerventil und
- Figur 2: das erfindungsgemäße Steuerventil der Figur 1 in einem Längsschnitt.

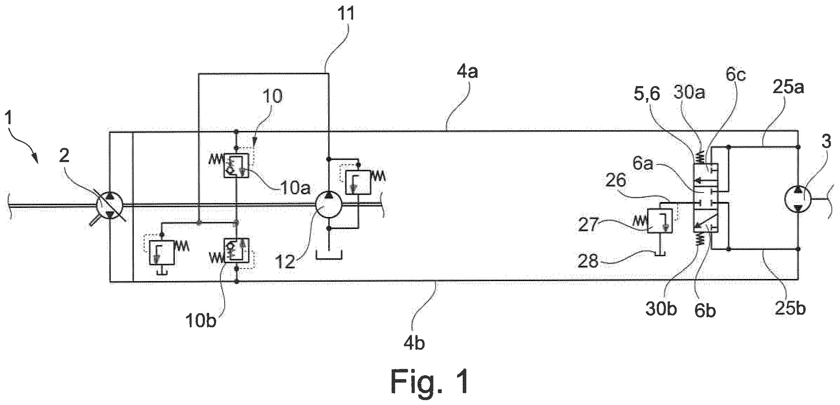

In der Figur 1 ist ein Schaltplan eines hydrostatischen Antriebssystems 1 im geschlossenen Kreislauf mit einem erfindungsgemäßen Steuerventil 6 dargestellt.

Das hydrostatische Antriebssystem 1 umfasst in dem dargestellten Ausführungsbeispiel eine hydrostatische Pumpe 2 und einen im geschlossenen Kreislauf an die Pumpe 2 angeschlossenen Hydromotor 3, die mittels Druckmittelleitungen 4a, 4b im geschlossenen Kreislauf miteinander verbunden sind.

Der geschlossene Kreislauf umfasst ein Ausspeisventil 5, das als erfindungsgemäßes Steuerventil 6 ausgebildet ist.

Zur Maximaldruckabsicherung der Hochdruckseite des geschlossenen Kreislaufs ist eine Druckabsicherungseinrichtung 10 vorgesehen, die von einem der Druckmittelleitung 4a zugeordneten Druckbegrenzungsventil 10a und einem der Druckmittelleitung 4b zugeordneten Druckbegrenzungsventil 10b gebildet ist. Im dargestellten Ausführungsbeispiel sind die Druckbegrenzungsventile 10a, 10b als kombinierte Druckbegrenzungs- und Nachsaugventile ausgebildet, die über die als Rückschlagventile ausgebildeten Nachsaugeventile die Zuführung eines Spülvolumenstroms in die Niederdruckseite des geschlossenen Kreislaufs ermöglichen. Hierzu sind die kombinierten Druckbegrenzungs- und Nachsaugventile an eine Speiseleitung 11 einer Speisepumpe 12 des Antriebssystems 1 angeschlossen. Die als kombinierte Druckbegrenzungs- und Nachsaugventile ausgebildeten Druckbegrenzungsventile 10a, 10b sind gegenseitig verschaltet, so dass beim Ansprechen des der hochdruckseitigen Druckmittelleitung 4a bzw. 4b zugeordneten Druckbegrenzungsventils 10a bzw. 10b Druckmittel über das Nachsaugeventil des jeweiligen anderen Druckbegrenzungsventils 10b bzw. 10a in die niederdruckseitige Druckmittelleitung 10b bzw. 10a abströmen kann.

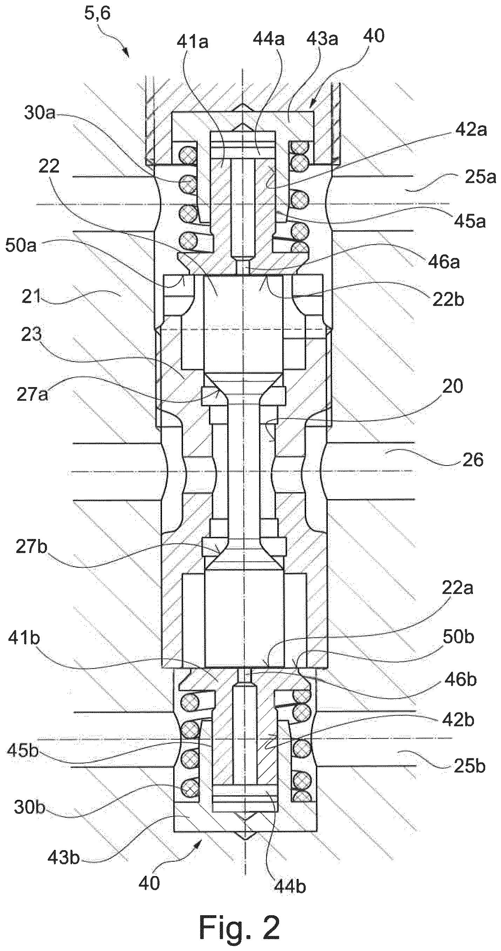

Das als Ausspeiseventil 5 ausgebildete Steuerventil 6 weist - wie in der Figur 2 näher dargestellt ist - einen in einer Längsbohrung 20 eines Gehäuses 21 längsverschiebbar angeordneten Steuerschieber 22 auf. Die Längsbohrung 20 ist in einer Ventilhülse 23 ausgebildet, die in dem Gehäuse 21 befestigt ist und somit einen Teil des Gehäuses 21 bildet.

Das Steuerventil 6 weist einen ersten Eingangsanschluss 25a, einen zweiten Eingangsanschluss 25b und einen Ausgangsanschluss 26 auf. Die Eingangsanschlüsse 25a, 25b und der Ausgangsanschluss 26 sind von entsprechenden Anschlussbohrungen an der Längsbohrung 20 gebildet. Der Ausganganschluss 26 ist in Längsrichtung des Steuerventils 6 zwischen den beiden Eingangsanschlüssen 25a, 25b angeordnet.

Der erste Eingangsanschluss 25a ist - wie in der Figur 1 dargestellt ist - mit der Druckmittelleitung 4a des geschlossenen Kreislaufs verbunden. Der zweite Eingangsanschluss 25b ist entsprechend mit der Druckmittelleitung 4b des geschlossenen Kreislaufs verbunden. Der Ausgangsanschluss 26 ist unter Zwischenschaltung eine Druckbegrenzungsventils 27 mit einem Behälter 28 verbunden.

Das Steuerventil 6 weist eine Sperrstellung 6a auf, in der eine Verbindung der beiden Eingangsanschlüsse 25a, 25b mit dem Ausgangsanschluss 26 abgesperrt ist. Das Steuerventil 6 weist eine erste Öffnungsstellung 6b auf, in der der erste Eingangsanschlusses 25a mit dem Ausgangsanschluss 26 verbunden ist. In der ersten Öffnungsstellung 6b ist der zweite Eingangsanschluss 25b abgesperrt. Das Steuerventil 6 weist eine zweite Öffnungsstellung 6c auf, in der der zweite Eingangsanschlusses 25b mit dem Ausgangsanschluss 26 verbunden ist. In der zweiten Öffnungsstellung 6c ist der erste Eingangsanschluss 25a abgesperrt.

Der Steuerschieber 22 des Steuerventils 6 ist mit einem ersten Steuerkegel 27a versehen, der an der Längsbohrung 20 die Verbindung des ersten Eingangsanschlusses 25a mit dem Ausganganschluss 26 steuert. Der Steuerschieber 22 des Steuerventils 6 ist mit einem zweiten Steuerkegel 27b versehen, der an der Längsbohrung 20 die Verbindung des zweiten Eingangsanschlusses 25b mit dem Ausganganschluss 26 steuert.

In der Figur 2 ist das Steuerventil 6 in der Sperrstellung 6a dargestellt, in der der erste Steuerkegel 27a die Verbindung des ersten Eingangsanschlusses 25a mit dem Ausganganschluss 26 absperrt und der zweiten Steuerkegel 27b die Verbindung des zweiten Eingangsanschlusses 25b mit dem Ausganganschluss 26 absperrt. Durch eine Betätigung des Steuerschiebers 22 nach in der Figur 2 oben wird das Steuerventil 6 in die erste Öffnungsstellung 6b betätigt, in der der erste Steuerkegel 27a die Verbindung des ersten Eingangsanschlusses 25a mit dem Ausganganschluss 26 öffnet. In der ersten Öffnungsstellung 6b sperrt der zweite Steuerkegel 27b die Verbindung des zweiten Eingangsanschlusses 25b mit dem Ausganganschluss 26 ab. Durch eine Betätigung des Steuerschiebers 22 nach in der Figur 2 unten wird das Steuerventil 6 in die zweite Öffnungsstellung 6c betätigt, in der der zweite Steuerkegel 27b die Verbindung des zweiten Eingangsanschlusses 25b mit dem Ausganganschluss 26 öffnet. In der zweiten Öffnungsstellung 6c sperrt der erste Steuerkegel 27a die Verbindung des ersten Eingangsanschlusses 25a mit dem Ausganganschluss 26 ab. Der Steuerschieber 22 des Steuerventils 6 ist somit zwischen der Sperrstellung 6a, in der eine Verbindung der beiden Eingangsanschlüsse 25a, 25b mit dem Ausgangsanschluss 26 abgesperrt ist, einer ersten Öffnungsstellung 6b, in der der erste Eingangsanschlusses 25a mit dem Ausgangsanschluss 26 verbunden ist, und einer zweiten Öffnungsstellung 6c, in der der zweite Eingangsanschlusses 25b mit dem Ausgangsanschluss 26 verbunden ist, betätigbar.

Das Steuerventil 6 ist mittels zwei Federn 30a, 30b in die als Neutralstellung ausgebildete Sperrstellung 6a betätigbar. Das Steuerventil 6 ist hydraulisch in die Öffnungsstellungen 6b, 6c betätigbar. Das Steuerventil 6 ist hierzu von dem in dem zweiten Eingangsanschluss 25b und somit dem in der Druckmittelleitung 4b anstehenden Druck des geschlossenen Kreislaufs in die erste Öffnungsstellung 6b betätigbar. An dem Steuerschieber 22 ist hierzu an der in der Figur 2 unteren Stirnseite 22a eine Steuerfläche ausgebildet, die von dem im zweiten Eingangsanschluss 25b und somit dem in der Druckmittelleitung 4b anstehenden Druck beaufschlagt ist. Das Steuerventil 6 ist von dem in dem ersten Eingangsanschluss 25a und somit dem in der Druckmittelleitung 4a anstehenden Druck des geschlossenen Kreislaufs in die zweite Öffnungsstellung 6c betätigbar. An dem Steuerschieber 22 ist hierzu an der in der Figur 2 oberen Stirnseite 22b eine Steuerfläche ausgebildet, die von dem im ersten Eingangsanschluss 25a und somit dem in der Druckmittelleitung 4a anstehenden Druck beaufschlagt ist.

Das Steuerventil 6 ist somit als Kombination aus einem Längsschieberventil und einem Sitzventil ausgebildet und weist die Funktion eines Umschaltventils auf, mit dem je nach Druckverhältnissen in dem geschlossenen Kreislauf die jeweilige niederdruckseitige Druckmittelleitung 4a bzw. 4b mit dem Ausgangsanschluss 26 verbunden wird, um Druckmittel aus der Niederdruckseite des geschlossenen Kreislaufs zu entnehmen und auszuspeisen. Bildet beispielsweise die erste Druckmittelleitung 4a die Hochdruckseite des geschlossenen Kreislaufs und die zweite Druckmittelleitung 4b die Niederdruckseite des geschlossenen Kreislaufs, wird der Steuerschieber 22 von dem an der Stirnseite 22b anstehenden Hochdruck des geschlossenen Kreislaufs nach in der Figur 2 unten in die zweite Öffnungsstellung 6c betätigt, in der der zweite Eingangsanschluss 25b und somit die Niederdruckseite des geschlossenen Kreislaufs mit dem Ausganganschluss 26 verbunden ist. Bildet beispielsweise die zweite Druckmittelleitung 4b die Hochdruckseite des geschlossenen Kreislaufs und die erste Druckmittelleitung 4a die Niederdruckseite des geschlossenen Kreislaufs, wird der Steuerschieber 22 von dem an der Stirnseite 22a anstehenden Hochdruck des geschlossenen Kreislaufs nach in der Figur 2 oben in die erste Öffnungsstellung 6b betätigt, in der der erste Eingangsanschluss 25a und somit die Niederdruckseite des geschlossenen Kreislaufs mit dem Ausganganschluss 26 verbunden ist.

Bei dem erfindungsgemäßen Steuerventil 6 ist eine mit dem Steuerschieber 22 in Wirkverbindung stehende hydraulischen Dämpfungseinrichtung 40 vorgesehen, mit der eine Dämpfung der Bewegung des Steuerschiebers 22 erzeugbar ist. Die hydraulische Dämpfungseinrichtung 40 ist derart ausgebildet, dass die Dämpfung der Dämpfungseinrichtung 40 bei einer Bewegung des Steuerschiebers 22 von der Sperrstellung 6a in die erste Öffnungsstellung 6b oder die zweite Öffnungsstellung 6c wirksam ist und dass die Dämpfung der Dämpfungseinrichtung 40 bei einer Bewegung des Steuerschiebers 22 von der ersten Öffnungsstellung 6b oder der zweiten Öffnungsstellung 6c in die Sperrstellung 6a unwirksam ist.

Die hydraulische Dämpfungseinrichtung 40 weist hierzu zwei Dämpfungskolben 41a, 41b aufweist, wobei der erste Dämpfungskolben 41a bei einer Bewegung des Steuerschiebers 22 von der Sperrstellung 6a in die erste Öffnungsstellung 6b eine Dämpfung der Bewegung des Steuerschiebers 22 ermöglicht und der zweite Dämpfungskolben 41b bei einer Bewegung des Steuerschiebers 22 von der Sperrstellung 6a in die zweite Öffnungsstellung 6c eine Dämpfung der Bewegung des Steuerschiebers 22 erzeugt.

Der Dämpfungskolben 41a ist in einer Aufnahmebohrung 42a einer Hülse 43a, die im Gehäuse 21 befestigt ist, längsverschiebbar angeordnet. Zwischen der Aufnahmebohrung 42a und dem Dämpfungskolben 41a ist ein Dämpfungsraum 44a ausgebildet, der von Druckmittel gefüllt ist. Zum Wirksammachen der Dämpfung wird Druckmittel beim Hineinfahren des Dämpfungskolbens 41a in die Aufnahmebohrung 42a über eine Drosseleinrichtung 45a aus dem Dämpfungsraum 44a verdrängt. Zum Unwirksammachen der Dämpfung kann Druckmittel beim Herausfahren des Dämpfungskolbens 41a aus der Aufnahmebohrung 42a über eine Nachsaugeöffnung 46a in den Dämpfungsraum 44a einströmen.

Der Dämpfungskolben 41b ist in einer Aufnahmebohrung 42b einer Hülse 43b, die im Gehäuse 21 befestigt ist, längsverschiebbar angeordnet. Zwischen der Aufnahmebohrung 42b und dem Dämpfungskolben 41b ist ein Dämpfungsraum 44b ausgebildet, der von Druckmittel gefüllt ist. Zum Wirksammachen der Dämpfung wird Druckmittel beim Hineinfahren des Dämpfungskolbens 41b in die Aufnahmebohrung 42b über eine Drosseleinrichtung 45b aus dem Dämpfungsraum 44b verdrängt. Zum Unwirksammachen der Dämpfung kann Druckmittel beim Herausfahren des Dämpfungskolbens 41b aus der Aufnahmebohrung 42b über eine Nachsaugeöffnung 46b in den Dämpfungsraum 44b einströmen.

Die Drosseleinrichtung 45a ist von einem Ringspalt zwischen dem Dämpfungskolben 41a und der Aufnahmebohrung 42a gebildet. Entsprechend ist die Drosseleinrichtung 45b von einem Ringspalt zwischen dem Dämpfungskolben 41b und der Aufnahmebohrung 42b gebildet.

Der erste Dämpfungskolben 41a und der zweite Dämpfungskolben 41b sind koaxial zu dem Steuerschieber 22 angeordnet und von dem Steuerschieber 22 des Steuerventils 6 betätigbar. Der erste Dämpfungskolben 41a steht zur Betätigung mit der oberen Stirnseite 22b des Steuerschiebers 22 des Steuerventils 6 in Wirkverbindung und der zweite Dämpfungskolben 41b mit der unteren Stirnseite 22a des Steuerschiebers 22 des Steuerventils 6 in Wirkverbindung.

Die Nachsaugeöffnung 46a ist von einer mit dem Dämpfungsraum 44a in Verbindung stehenden Längsbohrung im ersten Dämpfungskolben 41a gebildet, die in eine Stirnseite des ersten Dämpfungskolbens 41a mündet, wobei die Mündung der Längsbohrung von der Stirnseite 22b des Steuerschiebers 22 angesteuert ist. Entsprechend ist die Nachsaugeöffnung 46b von einer mit dem Dämpfungsraum 44b in Verbindung stehenden Längsbohrung im zweiten Dämpfungskolben 41b gebildet, die in eine Stirnseite des ersten Dämpfungskolbens 41b mündet, wobei die Mündung der Längsbohrung von der Stirnseite 22a des Steuerschiebers 22 angesteuert ist.

Die Nachsaugeöffnungen 46a, 46b der Dämpfungskolben 41a, 41b sind somit von dem Steuerschieber 22 des Steuerventils 6 angesteuert.

Die Nachsaugeöffnung 46a des ersten Dämpfungskolbens 41a wird hierbei bei einer Bewegung des Steuerschiebers 22 von der Sperrstellung 6a in die erste Öffnungsstellung 6b, wobei der Steuerschieber 22 in der Figur 2 nach oben betätigt wird, von der Stirnseite 22b des Steuerschiebers 22 verschlossen. Der nach oben fahrende Steuerschieber 22 betätigt hierbei den ersten Dämpfungskolben 41a und schiebt den ersten Dämpfungskolben 41a in die Aufnahmebohrung 42a hinein. Bei einer Betätigung des Steuerschiebers 22 von der ersten Öffnungsstellung 6b in die Sperrstellung 6 kann der Steuerschieber 22 mit der Stirnseite 22b von der Nachsaugeöffnung 46a des ersten Dämpfungskolbens 41a abheben und somit die Nachsaugeöffnung 46a öffnen.

Die Nachsaugeöffnung 46b des zweiten Dämpfungskolbens 41b wird bei einer Bewegung des Steuerschiebers 22 von der Sperrstellung 6a in die zweite Öffnungsstellung 6c, wobei der Steuerschieber 22 in der Figur 2 nach unten betätigt wird, von der Stirnseite 22a des Steuerschiebers 22 verschlossen. Der nach unten fahrende Steuerschieber 22 betätigt hierbei den zweiten Dämpfungskolben 41 b und schiebt den zweiten Dämpfungskolben 41b in die Aufnahmebohrung 42b hinein. Bei einer Betätigung des Steuerschiebers 22 von der zweiten Öffnungsstellung 6c in die Sperrstellung 6 kann der Steuerschieber 22 mit der Stirnseite 22a von der Nachsaugeöffnung 46b des zweiten Dämpfungskolbens 41b abheben und somit die Nachsaugeöffnung 46b öffnen.

Der erste Dämpfungskolben 41a steht weiterhin mit der Feder 30a und der zweite Dämpfungskolben 41b mit der Feder 30b in Wirkverbindung. Die Federn 30a, 30b fahren die Dämpfungskolben 41a, 41b jeweils aus der Aufnahmebohrung 42a, 42b heraus und betätigen hierdurch den Steuerschieber 22 in die als Neutralstellung ausgebildete Sperrstellung 6a.

Der erste Dämpfungskolben 41a wirkt mit einem ersten Anschlag 50a zusammen, der das Herausfahren des ersten Dämpfungskolbens 41a aus der Aufnahmebohrung 42a begrenzt. Entsprechend wirkt der zweite Dämpfungskolben 41b mit einem zweiten Anschlag 50b zusammen, der das Herausfahren des zweiten Dämpfungskolbens 41 b aus der Aufnahmebohrung 42b begrenzt. Die Anschläge 50a, 50b sind im dargestellten Ausführungsbeispiel von entsprechenden Anschlagflächen an der Ventilhülse 23 gebildet, an denen die Dämpfungskolben 41a, 41b mit der Stirnseite in Wirkverbindung bringbar sind. Die Anschläge 50a, 50b sind derart ausgeführt, dass bei an den Anschlägen 50a, 50b anliegenden Dämpfungskolben 41a, 41b der Steuerschieber 22 von den Federn 30a, 30b in die Sperrstellung 6a betätigt ist und die Nachsaugeöffnungen 46a, 46b von den Stirnseiten 22a, 22b des Steuerschiebers 22 verschlossen sind. Um in der Sperrstellung 6a an der Stirnseite 22a eine Steuerfläche auszubilden, die von dem im zweiten Eingangsanschluss 25b und somit dem in der Druckmittelleitung 4b anstehenden Druck beaufschlagt ist, kann die Stirnseite 22a ballig ausgeführt sein. Entsprechend kann die Stirnseite 22b ballig ausgeführt sein, um in der Sperrstellung 6a an der Stirnseite 22b eine Steuerfläche auszubilden, die von dem im ersten Eingangsanschluss 25a und somit dem in der Druckmittelleitung 4a anstehenden Druck beaufschlagt ist.

Der erste Dämpfungskolben 41a liegt somit in der Sperrstellung 6a und in der zweiten Öffnungsstellung 6c des Steuerschiebers 22 an dem ersten Anschlag 50a an. Entsprechend liegt der zweite Dämpfungskolben 41b in der Sperrstellung 6a und in der ersten Öffnungsstellung 6b des Steuerschiebers 22 an dem zweiten Anschlag 50b an.

Das Steuerventil 6 mit der erfindungsgemäßen Dämpfungseinrichtung 40 arbeitet wie folgt.

Sofern in dem geschlossenen Kreislauf die mit dem zweiten Eingangsanschluss 25b in Verbindung stehende Druckmittelleitung 4b die Hochdruckseite des geschlossenen Kreislaufs und die mit dem ersten Eingangsanschluss 25a in Verbindung stehende Druckmittelleitung 4a die Niederdruckseite des geschlossenen Kreislaufs bildet, wird der in der Sperrstellung 6a befindliche Steuerschieber 22 von dem an der Steuerfläche der Stirnseite 22a anstehenden Hochdruck der Hochdruckseite nach in der Figur 2 oben in die erste Öffnungsstellung 6b betätigt, in der der erste Eingangsanschluss 25a und somit die Niederdruckseite des geschlossenen Kreislaufs mit dem Ausgangsanschluss 26 verbunden ist, um Druckmittel aus der Niederdruckseite des geschlossenen Kreislaufs auszuspeisen. Bei der Bewegung des Steuerschiebers 22 von der Sperrstellung 6a in die erste Öffnungsstellung 6b und somit in Öffnungsrichtung zur Öffnungsstellung 6b wird mittels des ersten Dämpfungskolbens 41a eine Dämpfung der Bewegung des Steuerschiebers 22 erzielt, indem beim Öffnungshub des Steuerschiebers 22 von der Stirnseite 22b des Steuerschiebers 22 die Nachsaugeöffnung 46a verschlossen wird und der erste Dämpfungskolben 41a durch die Bewegung des Steuerschiebers 22 in die Aufnahmebohrung 42a hineingeschoben wird, wobei das sich im Dämpfungsraum 44a befindliche Druckmittel über die Drosseleinrichtung 45a verdrängt werden muss. Dieses Verdrängen des sich im Dämpfungsraum 44a befindliche Druckmittel über die Drosseleinrichtung 45a dämpft die Bewegung des Steuerschiebers 22 in Öffnungsrichtung von der Sperrstellung 6a zur ersten Öffnungsstellung 6b. Der zweite Dämpfungskolben 41 b liegt bei einer Betätigung des Steuerschiebers 22 nach in der Figur 2 oben in die erste Öffnungsstellung 6b an dem Anschlag 50b an und fährt nicht weiter aus der Aufnahmebohrung 42b heraus. Sofern sich die Druckverhältnisse in den Druckmittelleitungen 4a, 4b ändern und die dem zweiten Eingangsanschluss 25b in Verbindung stehende Druckmittelleitung 4b die Niederdruckseite des geschlossenen Kreislaufs und die mit dem ersten Eingangsanschluss 25a in Verbindung stehende Druckmittelleitung 4a die Hochdruckseite des geschlossenen Kreislaufs bildet, wird der Steuerschieber 22 von dem an der Steuerfläche der Stirnseite 22b anstehenden Hochdruck der Hochdruckseite ausgehend von der ersten Öffnungsstellung 6b zurück in die Sperrstellung 6a betätigt. Bei der Bewegung des Steuerschiebers 22 von der ersten Öffnungsstellung 6b in die Sperrstellung 6a und somit in Schließrichtung des Steuerventils 6 ist die Dämpfung der Bewegung des Steuerschiebers 22 durch den ersten Dämpfungskolbens 41a unwirksam, da der Steuerschieber 22 mit der Stirnseite 22b die Nachsaugeöffnung 46a freigibt, so dass beim Schließhub und somit beim Schließvorgang des Steuerschiebers 22 Druckmittel über die freigegebene Nachsaugeöffnung 46a in den Dämpfungsraum 44a des ersten Dämpfungskolben 41a einströmen und nachgesaugt werden kann. Der Steuerschieber 22 kann somit schnell von der ersten Öffnungsstellung 6b in die Sperrstellung 6a betätigt werden. Durch das schnelle Schließen des Steuerventils 6 wird eine Leckage vom mit Hochdruck beaufschlagten ersten Eingangsanschluss 25a zum Ausgangsanschluss 26 vermieden.

Sofern in dem geschlossenen Kreislauf die mit dem ersten Eingangsanschluss 25a in Verbindung stehende Druckmittelleitung 4a die Hochdruckseite des geschlossenen Kreislaufs und die mit dem zweiten Eingangsanschluss 25b in Verbindung stehende Druckmittelleitung 4b die Niederdruckseite des geschlossenen Kreislaufs bildet, wird der in der Sperrstellung 6a befindliche Steuerschieber 22 von dem an der Steuerfläche der Stirnseite 22b anstehenden Hochdruck der Hochdruckseite nach in der Figur 2 unten in die zweite Öffnungsstellung 6c betätigt, in der der zweite Eingangsanschluss 25b und somit die Niederdruckseite des geschlossenen Kreislaufs mit dem Ausgangsanschluss 26 verbunden ist, um Druckmittel aus der Niederdruckseite des geschlossenen Kreislaufs auszuspeisen. Bei der Bewegung des Steuerschiebers 22 von der Sperrstellung 6a in die zweite Öffnungsstellung 6c und somit in Öffnungsrichtung zur Öffnungsstellung 6c wird mittels des zweiten Dämpfungskolbens 41b eine Dämpfung der Bewegung des Steuerschiebers 22 erzielt, indem beim Öffnungshub des Steuerschiebers 22 von der Stirnseite 22a des Steuerschiebers 22 die Nachsaugeöffnung 46b verschlossen wird und der zweite Dämpfungskolben 41b durch die Bewegung des Steuerschiebers 22 in die Aufnahmebohrung 42b hineingeschoben wird, wobei das sich im Dämpfungsraum 44b befindliche Druckmittel über die Drosseleinrichtung 45b verdrängt werden muss. Dieses Verdrängen des sich im Dämpfungsraum 44b befindliche Druckmittel über die Drosseleinrichtung 45b dämpft die Bewegung des Steuerschiebers 22 in Öffnungsrichtung von der Sperrstellung 6a zur zweiten Öffnungsstellung 6c. Der erste Dämpfungskolben 41a liegt bei einer Betätigung des Steuerschiebers 22 nach in der Figur 2 unten in die zweite Öffnungsstellung 6c an dem Anschlag 50a an und fährt nicht weiter aus der Aufnahmebohrung 42a heraus. Sofern sich die Druckverhältnisse in den Druckmittelleitungen 4a, 4b ändern und die dem ersten Eingangsanschluss 25a in Verbindung stehende Druckmittelleitung 4a die Niederdruckseite des geschlossenen Kreislaufs und die mit dem zweiten Eingangsanschluss 25b in Verbindung stehende Druckmittelleitung 4b die Hochdruckseite des geschlossenen Kreislaufs bildet, wird der Steuerschieber 22 von dem an der Steuerfläche der Stirnseite 22a anstehenden Hochdruck der Hochdruckseite ausgehend von der zweiten Öffnungsstellung 6c zurück in die Sperrstellung 6a betätigt. Bei der Bewegung des Steuerschiebers 22 von der zweiten Öffnungsstellung 6c in die Sperrstellung 6a und somit in Schließrichtung des Steuerventils 6 ist die Dämpfung der Bewegung des Steuerschiebers 22 durch den zweiten Dämpfungskolbens 41b unwirksam, da der Steuerschieber 22 mit der Stirnseite 22a die Nachsaugeöffnung 46b freigibt, so dass beim Schließhub und somit beim Schließvorgang des Steuerschiebers 22 Druckmittel über die freigegebene Nachsaugeöffnung 46b in den Dämpfungsraum 44b des zweiten Dämpfungskolben 41b einströmen und nachgesaugt werden kann. Der Steuerschieber 22 kann somit schnell von der zweiten Öffnungsstellung 6c in die Sperrstellung 6a betätigt werden. Durch das schnelle Schließen des Steuerventils 6 wird eine Leckage vom mit Hochdruck beaufschlagten zweiten Eingangsanschluss 25b zum Ausgangsanschluss 26 vermieden.

Bei dem erfindungsgemäßen Steuerventil 6 wirkt somit die Dämpfung der Dämpfungseinrichtung nur in die jeweilige Öffnungsrichtung des Steuerventils 6, jedoch nicht in die Schließrichtung des Steuerventils 6. Schwingungen des Steuerventils 6 können mit der erfindungsgemäßen Dämpfungseinrichtung 40 vermieden und minimiert werden.

Das Steuerventil 6 mit der erfindungsgemäßen Dämpfungseinrichtung 40 ist nicht auf die dargestellte Ausführungsform eines Ausspeiseventils 5 beschränkt. Die erfindungsgemäße Dämpfungseinrichtung 40 kann ebenfalls bei anderen als Schieberventilen oder Sitzventilen ausgebildeten Steuerventilen eingesetzt werden.

## Patentansprüche

1. Steuerventil (6) mit einem in einer Längsbohrung (20) eines Gehäuses (21) längsverschiebbar angeordneten Steuerschieber (22), wobei das Steuerventil (6) zumindest einen Eingangsanschluss (25a; 25b) und einen Ausgangsanschluss (26) aufweist, wobei der Steuerschieber (22) zwischen einer Sperrstellung (6a), in der eine Verbindung des Eingangsanschlusses (25a; 25b) mit dem Ausgangsanschluss (26) abgesperrt ist, und mindestens einer Öffnungsstellung (6b; 6c), in der der Eingangsanschlusses (25a; 25b) mit dem Ausgangsanschluss (26) verbunden ist, betätigbar ist, wobei eine mit dem Steuerschieber (22) in Wirkverbindung stehende hydraulische Dämpfungseinrichtung (40) vorgesehen ist, mit der eine Dämpfung der Bewegung des Steuerschiebers (22) erzeugbar ist, **dadurch gekennzeichnet, dass** die hydraulische Dämpfungseinrichtung (40) derart ausgebildet ist, dass die Dämpfung der Dämpfungseinrichtung (40) bei einer Bewegung des Steuerschiebers (22) von der Sperrstellung (6a) in die Öffnungsstellung (6b; 6c) wirksam ist und die Dämpfung der Dämpfungseinrichtung (40) bei einer Bewegung des Steuerschiebers (22) von der Öffnungsstellung (6b; 6c) in die Sperrstellung (6a) unwirksam ist, wobei die hydraulische Dämpfungseinrichtung (40) mindestens einen Dämpfungskolben (41a; 41b) aufweist, der in einer Aufnahmebohrung (42a; 42b) längsverschiebbar angeordnet ist, wobei zwischen der Aufnahmebohrung (42a; 42b) und dem Dämpfungskolben (41a; 41b) ein Dämpfungsraum (44a; 44b) ausgebildet ist, der von Druckmittel gefüllt ist, wobei zum Wirksammachen der Dämpfung Druckmittel beim Hineinfahren des Dämpfungskolbens (41a; 41b) in die Aufnahmebohrung (42a; 42b) über eine Drosseleinrichtung (45a; 45b) aus dem Dämpfungsraum (44a; 44b) verdrängt wird und wobei zum Unwirksammachen der Dämpfung Druckmittel beim Herausfahren des Dämpfungskolbens (41a; 41b) aus der Aufnahmebohrung (42a; 42b) über eine Nachsaugeöffnung (46a; 46b) in den Dämpfungsraum (44a; 44b) einströmt.

2. Steuerventil nach Anspruch 1, **dadurch gekennzeichnet, dass** die Drosseleinrichtung (45a; 45b) von einem Ringspalt zwischen dem Dämpfungskolben (41a; 41b) und der Aufnahmebohrung (42a; 42b) gebildet ist.

3. Steuerventil nach Anspruch 1 oder 2, **dadurch gekennzeichnet, dass** die Nachsaugeöffnung (46a; 46b) des Dämpfungskolbens (41a; 41b) von dem Steuerschieber (22) angesteuert ist, wobei die Nachsaugeöffnung (46a; 46b) des Dämpfungskolbens (41a; 41b) bei einer Bewegung des Steuerschiebers (22) von der Sperrstellung (6a) in die Öffnungsstellung (6b; 6c) von dem Steuerschieber (22) verschlossen ist und die Nachsaugeöffnung (46a; 46b) des Dämpfungskolbens (41a; 41b) bei einer Bewegung des Steuerschiebers (22) von der Öffnungsstellung (6b; 6c) in die Sperrstellung (6a) von dem Steuerschieber (22) geöffnet wird.

4. Steuerventil nach einem der Ansprüche 1 bis 3, **dadurch gekennzeichnet, dass** der Dämpfungskolben (41a; 41b) koaxial zu dem Steuerschieber (22) angeordnet ist und von dem Steuerschieber (22) betätigbar ist, wobei der Dämpfungskolben (41a; 41b) bei einer Bewegung des Steuerschiebers (22) von der Sperrstellung (6a) in die Öffnungsstellung (6b; 6c) von dem Steuerschieber (22) in die Aufnahmebohrung (42a; 42b) hineingefahren wird und der Dämpfungskolben (41a; 41b) bei einer Bewegung des Steuerschiebers (22) von der Öffnungsstellung (6b; 6c) in die Sperrstellung (6a) aus der Aufnahmebohrung (42a; 42b) herausfährt.

5. Steuerventil nach einem der Ansprüche 1 bis 4, **dadurch gekennzeichnet, dass** der Dämpfungskolben (41a; 41b) mit einer Federeinrichtung (30a; 30b) in Wirkverbindung steht, die den Dämpfungskolben (41a; 41b) aus der Aufnahmebohrung (42a; 42b) herausfährt.

6. Steuerventil nach einem der Ansprüche 1 bis 5, **dadurch gekennzeichnet, dass** der Dämpfungskolben (41a; 41b) mit einer Stirnseite (22a; 22b) des Steuerschiebers (22) des Steuerventils (6) in Wirkverbindung steht.

7. Steuerventil nach einem der Ansprüche 1 bis 6, **dadurch gekennzeichnet, dass** die Nachsaugeöffnung (46a; 46b) an einer Stirnseite des Dämpfungskolbens (41a; 41b) angeordnet ist und von der Stirnseite (22a; 22b) des Steuerschiebers (22) angesteuert ist.

8. Steuerventil nach einem der Ansprüche 1 bis 7, **dadurch gekennzeichnet, dass** das Steuerventil (6) einen ersten Eingangsanschluss (25a), einen zweiten Eingangsanschluss (25b) und einen Ausgangsanschluss (26) aufweist, wobei der Steuerschieber (22) zwischen einer Sperrstellung (6a), in der eine Verbindung der beiden Eingangsanschlüsse (25a, 25b) mit dem Ausgangsanschluss (26) abgesperrt ist, einer ersten Öffnungsstellung (6b), in der der erste Eingangsanschlusses (25a) mit dem Ausgangsanschluss (26) verbunden ist, und einer zweiten Öffnungsstellung (6c), in der der zweite Eingangsanschlusses (25b) mit dem Ausgangsanschluss (26) verbunden ist, betätigbar ist, wobei die hydraulische Dämpfungseinrichtung (40) derart ausgebildet ist, dass die Dämpfung der Dämpfungseinrichtung (40) bei einer Bewegung des Steuerschiebers (22) von der Sperrstellung (6a) in die erste Öffnungsstellung (6b) oder die zweite Öffnungsstellung (6c) wirksam ist und dass die Dämpfung der Dämpfungseinrichtung (40) bei einer Bewegung des Steuerschiebers (22) von der ersten Öffnungsstellung (6b) oder der zweiten Öffnungsstellung (6c) in die Sperrstellung (6a) unwirksam ist.

9. Steuerventil nach Anspruch 8, **dadurch gekennzeichnet, dass** die hydraulische Dämpfungseinrichtung (40) zwei Dämpfungskolben (41a, 41b) aufweist, wobei ein erster Dämpfungskolben (41a) bei einer Bewegung des Steuerschiebers (22) von der Sperrstellung (6a) in die erste Öffnungsstellung (6b) eine Dämpfung der Bewegung des Steuerschiebers (22) ermöglicht und ein zweiter Dämpfungskolben (41b) bei einer Bewegung des Steuerschiebers (22) von der Sperrstellung (6a) in die zweite Öffnungsstellung (6b) eine Dämpfung der Bewegung des Steuerschiebers (22) erzeugt.

10. Steuerventil nach Anspruch 9, **dadurch gekennzeichnet, dass** der erste Dämpfungskolben (41a) mit einer ersten Stirnseite (22b) des Steuerschiebers (22) des Steuerventils (6) in Wirkverbindung steht und der zweite Dämpfungskolben (41b) mit einer zweiten Stirnseite (22a) des Steuerschiebers (22) des Steuerventils (6) in Wirkverbindung steht.

11. Steuerventil nach Anspruch 9 oder 10, **dadurch gekennzeichnet, dass** der erste Dämpfungskolben (41a) mit einem ersten Anschlag (50a) zusammenwirkt, der das Herausfahren des ersten Dämpfungskolbens (41a) aus der Aufnahmebohrung (42a) begrenzt, und der zweite Dämpfungskolben (41b) mit einem zweiten Anschlag (50b) zusammenwirkt, der das Herausfahren des zweiten Dämpfungskolbens (41b) aus der Aufnahmebohrung (42b) begrenzt.

12. Steuerventil nach Anspruch 11, **dadurch gekennzeichnet, dass** der erste Dämpfungskolben (41a) in der Sperrstellung (6a) und in der zweiten Öffnungsstellung (6b) des Steuerschiebers (6) an dem ersten Anschlag (50a) anliegt und der zweite Dämpfungskolben (41b) in der Sperrstellung (6a) und in der ersten Öffnungsstellung (6a) des Steuerschiebers (6) an dem zweiten Anschlag (50b) anliegt.

13. Hydrostatischen Antriebssystems (1) im geschlossenen Kreislauf mit einem Steuerventil nach einem der Ansprüche 1 bis 12 als Ausspeiseventil (5) des hydrostatischen Antriebssystems (1).

## Claims

1. Control valve (6) having a control slide (22) which is arranged longitudinally displaceably in a longitudinal bore (20) of a housing (21), wherein the control valve (6) has at least one inlet port (25a; 25b) and one output port (26), wherein the control slide (22) is actuatable between a blocking position (6a), in which a connection of the inlet port (25a; 25b) to the outlet port (26) is blocked, and at least one opening position (6b; 6c), in which the inlet port (25a; 25b) is connected to the outlet port (26), wherein a hydraulic damping device (40) is provided which is hydraulically operatively connected to the control slide (22) and by means of which damping of the movement of the control slide (22) can be generated, **characterized in that** the hydraulic damping device (40) is designed such that the damping of the damping device (40) is active during a movement of the control slide (22) from the blocking position (6a) into the opening position (6b; 6c), and the damping of the damping device (40) is inactive during a movement of the control slide (22) from the opening position (6b; 6c) into the blocking position (6a), wherein the hydraulic damping device (40) has at least one damping piston (41a; 41b) which is arranged longitudinally displaceably in a receiving bore (42a; 42b), wherein, between the receiving bore (42a; 42b) and the damping piston (41a; 41b), there is formed a damping chamber (44a; 44b) which is filled by pressure medium, wherein, to activate the damping, as the damping piston (41a; 41b) moves into the receiving bore (42a; 42b), pressure medium is displaced out of the damping chamber (44a; 44b) via a throttle device (45a; 45b), and wherein, to deactivate the damping, as the damping piston (41a; 41b) moves out of the receiving bore (42a; 42b), pressure medium flows into the damping chamber (44a; 44b) via a replenishment opening (46a; 46b).

2. Control valve according to Claim 1, **characterized in that** the throttle device (45a; 45b) is formed by an annular gap between the damping piston (41a; 41b) and the receiving bore (42a; 42b).

3. Control valve according to Claim 1 or 2, **characterized in that** the replenishment opening (46a; 46b) of the damping piston (41a; 41b) is activated by the control slide (22), wherein the replenishment opening (46a; 46b) of the damping piston (41a; 41b) is closed by the control slide (22) during a movement of the control slide (22) from the blocking position (6a) into the opening position (6b; 6c), and the replenishment opening (46a; 46b) of the damping piston (41a; 41b) is opened by the control slide (22) during a movement of the control slide (22) from the opening position (6b; 6c) into the blocking position (6a).

4. Control valve according to any of Claims 1 to 3, **characterized in that** the damping piston (41a; 41b) is arranged coaxially with respect to the control slide (22) and is actuatable by the control slide (22), wherein the damping piston (41a; 41b) is moved by the control slide (22) into the receiving bore (42a; 42b) during a movement of the control slide (22) from the blocking position (6a) into the opening position (6b; 6c), and the damping piston (41a; 41b) moves out of the receiving bore (42a; 42b) during a movement of the control slide (22) from the opening position (6b; 6c) into the blocking position (6a).

5. Control valve according to any of Claims 1 to 4, **characterized in that** the damping piston (41a; 41b) is operatively connected to a spring device (30a; 30b) which moves the damping piston (41a; 41b) out of the receiving bore (42a; 42b).

6. Control valve according to any of Claims 1 to 5, **characterized in that** the damping piston (41a; 41b) is operatively connected to an end side (22a; 22b) of the control slide (22) of the control valve (6).

7. Control valve according to any of Claims 1 to 6, **characterized in that** the replenishment opening (46a; 46b) is arranged at an end side of the damping piston (41a; 41b) and is activated by the end side (22a; 22b) of the control slide (22).

8. Control valve according to any of Claims 1 to 7, **characterized in that** the control valve (6) has a first inlet port (25a), a second inlet port (25b) and an outlet port (26), wherein the control slide (22) is actuatable between a blocking position (6a), in which a connection of the two inlet ports (25a; 25b) to the outlet port (26) is blocked, a first opening position (6b), in which the first inlet port (25a) is connected to the outlet port (26), and a second opening position (6c), in which the second inlet port (25b) is connected to the outlet port (26), wherein the hydraulic damping device (40) is designed such that the damping of the damping device (40) is active during a movement of the control slide (22) from the blocking position (6a) into the first opening position (6b) or the second opening position (6c), and **in that** the damping of the damping device (40) is inactive during a movement of the control slide (22) from the first opening position (6b) or the second opening position (6c) into the blocking position (6a).

9. Control valve according to Claim 8, **characterized in that** the hydraulic damping device (40) has two damping pistons (41a; 41b), wherein a first damping piston (41a) permits damping of the movement of the control slide (22) during a movement of the control slide (22) from the blocking position (6a) into the first opening position (6b), and a second damping piston (41b) generates damping of the movement of the control slide (22) during a movement of the control slide (22) from the blocking position (6a) into the second opening position (6b).

10. Control valve according to Claim 9, **characterized in that** the first damping piston (41a) is operatively connected to a first end side (22b) of the control slide (22) of the control valve (6), and the second damping piston (41b) is operatively connected to a second end side (22a) of the control slide (22) of the control valve (6).

11. Control valve according to Claim 9 or 10, **characterized in that** the first damping piston (41a) interacts with a first stop (50a) which limits the movement of the first damping piston (41a) out of the receiving bore (42a), and the second damping piston (41b) interacts with a second stop (50b) which limits the movement of the second damping piston (41b) out of the receiving bore (42b).

12. Control valve according to Claim 11, **characterized in that** the first damping piston (41a) bears against the first stop (50a) in the blocking position (6a) and in the second opening position (6b) of the control slide (6), and the second damping piston (41b) bears against the second stop (50b) in the blocking position (6a) and in the first opening position (6a) of the control slide (6).

13. Closed-circuit hydrostatic drive system (1) having a control valve according to any of Claims 1 to 12 as a purge valve (5) of the hydrostatic drive system (1) .

## Revendications

1. Soupape de commande (6) comprenant un tiroir de commande (22) disposé de manière déplaçable longitudinalement dans un alésage longitudinal (20) d'un boîtier (21), la soupape de commande (6) présentant au moins un raccord d'entrée (25a ; 25b) et un raccord de sortie (26), le tiroir de commande (22) pouvant être actionné entre une position de blocage (6a), dans laquelle une connexion du raccord d'entrée (25a ; 25b) au raccord de sortie (26) est bloquée, et au moins une position d'ouverture (6b ; 6c), dans laquelle le raccord d'entrée (25a ; 25b) est connecté au raccord de sortie (26), un dispositif d'amortissement hydraulique (40) en liaison fonctionnelle avec le tiroir de commande (22) étant prévu, avec lequel un amortissement du mouvement du tiroir de commande (22) peut être généré, **caractérisée en ce que** le dispositif d'amortissement hydraulique (40) est réalisé de telle sorte que l'amortissement du dispositif d'amortissement (40) soit activé lors d'un déplacement du tiroir de commande (22) de la position de blocage (6a) dans la position d'ouverture (6b ; 6c) et que l'amortissement du dispositif d'amortissement (40) ne soit pas activé lors d'un déplacement du tiroir de commande (22) de la position d'ouverture (6b ; 6c) dans la position de blocage (6a), le dispositif d'amortissement hydraulique (40) présentant au moins un piston d'amortissement (41a ; 41b) qui est disposé de manière déplaçable longitudinalement dans un alésage de réception (42a ; 42b), un espace d'amortissement (44a ; 44b) étant réalisé entre l'alésage de réception (42a ; 42b) et le piston d'amortissement (41a ; 41b), lequel est rempli de fluide sous pression, du fluide sous pression, pour activer l'amortissement lors de l'introduction du piston d'amortissement (41a ; 41b) dans l'alésage de réception (42a ; 42b), étant repoussé par le biais d'un dispositif d'étranglement (45a ; 45b) hors de l'espace d'amortissement (44a ; 44b), et pour désactiver l'amortissement, du fluide sous pression, lors de la sortie du piston d'amortissement (41a ; 41b) hors de l'alésage de réception (42a ; 42b), affluant dans l'espace d'amortissement (44a ; 44b) par le biais d'une ouverture de réaspiration (46a ; 46b).

2. Soupape de commande selon la revendication 1, **caractérisée en ce que** le dispositif d'étranglement (45a ; 45b) est formé par une fente annulaire entre le piston d'amortissement (41a ; 41b) et l'alésage de réception (42a ; 42b).

3. Soupape de commande selon la revendication 1 ou 2, **caractérisée en ce que** l'ouverture de réaspiration (46a ; 46b) du piston d'amortissement (41a ; 41b) est commandée par le tiroir de commande (22), l'ouverture de réaspiration (46a ; 46b) du piston d'amortissement (41a, ; 41b), lors d'un déplacement du tiroir de commande (22) de la position de blocage (6a) dans la position d'ouverture (6b ; 6c), étant fermée par le tiroir de commande (22) et l'ouverture de réaspiration (46a ; 46b) du piston d'amortissement (41a ; 41b), lors d'un déplacement du tiroir de commande (22) de la position d'ouverture (6b ; 6c) dans la position de blocage (6a), étant ouverte par le tiroir de commande (22).

4. Soupape de commande selon l'une quelconque des revendications 1 à 3, **caractérisée en ce que** le piston d'amortissement (41a ; 41b) est disposé coaxialement par rapport au tiroir de commande (22) et peut être actionné par le tiroir de commande (22), le piston d'amortissement (41a ; 41b), lors d'un déplacement du tiroir de commande (22) de la position de blocage (6a) dans la position d'ouverture (6b ; 6c), étant rentré par le tiroir de commande (22) dans l'alésage de réception (42a ; 42b) et le piston d'amortissement (41a ; 41b), lors d'un déplacement du tiroir de commande (22) de la position d'ouverture (6b ; 6c) dans la position de blocage (6a), ressortant de l'alésage de réception (42a ; 42b).

5. Soupape de commande selon l'une quelconque des revendications 1 à 4, **caractérisée en ce que** le piston d'amortissement (41a ; 41b) est en liaison fonctionnelle avec un dispositif de ressort (30a ; 30b), qui fait ressortir le piston d'amortissement (41a ; 41b) hors de l'alésage de réception (42a ; 42b) .

6. Soupape de commande selon l'une quelconque des revendications 1 à 5, **caractérisée en ce que** le piston d'amortissement (41a ; 41b) est en liaison fonctionnelle avec un côté frontal (22a ; 22b) du tiroir de commande (22) de la soupape de commande (6) .

7. Soupape de commande selon l'une quelconque des revendications 1 à 6, **caractérisée en ce que** l'ouverture de réaspiration (46a ; 46b) est disposée au niveau d'un côté frontal du piston d'amortissement (41a ; 41b) et est commandée par le côté frontal (22a ; 22b) du tiroir de commande (22) .

8. Soupape de commande selon l'une quelconque des revendications 1 à 7, **caractérisée en ce que** la soupape de commande (6) présente un premier raccord d'entrée (25a) un deuxième raccord d'entrée (25b) et un raccord de sortie (26), le tiroir de commande (22) pouvant être actionné entre une position de blocage (6a) dans laquelle une connexion des deux raccords d'entrée (25a, 25b) au raccord de sortie (26) est bloquée, une première position d'ouverture (6b) dans laquelle le premier raccord d'entrée (25a) est connecté au raccord de sortie (26), et une deuxième position d'ouverture (6c) dans laquelle le deuxième raccord d'entrée (25b) est connecté au raccord de sortie (26), le dispositif d'amortissement hydraulique (40) étant réalisé de telle sorte que l'amortissement du dispositif d'amortissement (40) soit activé lors d'un déplacement du tiroir de commande (22) de la position de blocage (6a) dans la première position d'ouverture (6b) ou la deuxième position d'ouverture (6c) et que l'amortissement du dispositif d'amortissement (40) ne soit pas activé lors d'un déplacement du tiroir de commande (22) de la première position d'ouverture (6b) ou de la deuxième position d'ouverture (6c) dans la position de blocage (6a).

9. Soupape de commande selon la revendication 8, **caractérisée en ce que** le dispositif d'amortissement hydraulique (40) présente deux pistons d'amortissement (41a, 41b), un premier piston d'amortissement (41a), lors d'un déplacement du tiroir de commande (22) de la position de blocage (6a) dans la première position d'ouverture (6b), permettant un amortissement du déplacement du tiroir de commande (22) et un deuxième piston d'amortissement (41b), lors d'un déplacement du tiroir de commande (22) de la position de blocage (6a) dans la deuxième position d'ouverture (6b), générant un amortissement du déplacement du tiroir de commande (22).

10. Soupape de commande selon la revendication 9, **caractérisée en ce que** le premier piston d'amortissement (41a) est en liaison fonctionnelle avec un premier côté frontal (22b) du tiroir de commande (22) de la soupape de commande (6) et le deuxième piston d'amortissement (41b) est en liaison fonctionnelle avec un deuxième côté frontal (22a) du tiroir de commande (22) de la soupape de commande (6).

11. Soupape de commande selon la revendication 9 ou 10, **caractérisée en ce que** le premier piston d'amortissement (41a) coopère avec une première butée (50a) qui limite la sortie du premier piston d'amortissement (41a) hors de l'alésage de réception (42a), et le deuxième piston d'amortissement (41b) coopère avec une deuxième butée (50b) qui limite la sortie du deuxième piston d'amortissement (41b) hors de l'alésage de réception (42b).

12. Soupape de commande selon la revendication 11, **caractérisée en ce que** le premier piston d'amortissement (41a) s'applique dans la position de blocage (6a) et dans la deuxième position d'ouverture (6b) du tiroir de commande (6) contre la première butée (50a) et le deuxième piston d'amortissement (41b) s'applique dans la position de blocage (6a) et dans la première position d'ouverture (6a) du tiroir de commande (6) contre la deuxième butée (50b).

13. Système d'entraînement hydrostatique (1) en circuit fermé comprenant une soupape de commande selon l'une quelconque des revendications 1 à 12 en tant que soupape d'évacuation (5) du système d'entraînement hydrostatique (1).
